**Europäisches Patentamt**

**European Patent Office**

**Office européen des brevets**

(19)

(11) Veröffentlichungsnummer: **0 128 301**
**A2**

(12) # EUROPÄISCHE PATENTANMELDUNG

(21) Anmeldenummer: **84104026.4**

(22) Anmeldetag: **11.04.84**

(51) Int. Cl.³: **G 01 N 21/43**

(30) Priorität: **11.06.83 DE 3321203**

(43) Veröffentlichungstag der Anmeldung: **19.12.84**
**Patentblatt 84/51**

(84) Benannte Vertragsstaaten: **AT BE CH FR GB IT LI LU NL SE**

(71) Anmelder: **Phönix Armaturen-Werke Bregel GmbH, Eschborner Landstrasse 41-51, D-6000 Frankfurt (DE)**

(72) Erfinder: **Omet, Reinhard, Dipl.-Phys., Schwabenweg 1, D-6113 Babenhausen (DE)**

(74) Vertreter: **Kratzsch, Volkhard, Dipl.-Ing., Mülbergerstrasse 65, D-7300 Esslingen (DE)**

(54) **Refraktometer.**

(57) Es wird ein Refraktometer mit einem Meßsensor und einem Referenzsensor zur Temperaturkompensation angegeben, bei welchem zum Zwecke der Schaffung eines echten Handgeräts mit universeller Einsatzmöglichkeit Meßsensor und Referenzsensor zu einer Meßsonde zusammengefaßt sind, die über ein flexibles Lichtleiterkabel mit einem Gehäuse verbunden ist, in welchem alle sonstigen Bauelemente, wie Lichtquelle, Lichtdetektoren, Meßwertaufbereitungs- und Anzeigevorrichtung, untergebracht sind.

EP 0 128 301 A2

| Patentanwalt | Mülbergerstr. 65 | Zugelassener Vertreter beim |
|---|---|---|
| Dipl.-Ing. Volkhard Kratzsch | D-7300 Esslingen | Europäischen Patentamt |

0128301

| | Telefon Stuttgart (0711) 317000 | Deutsche Bank Esslingen 210906 |
|---|---|---|
| | cable «krapatent» esslingenneckar | Postscheckamt Stuttgart 10004-701 |

/

Phönix

Armaturen-Werke

Bregel GmbH

6000 Frankfurt

24.5.1983

Anwaltsakte 3767

Refraktometer

Die Erfindung betrifft ein Refraktometer der im Oberbegriff des Anspruchs 1 angegebenen Gattung.

Ein solches Refraktometer dient zur Bestimmung der Brechzahl eines insbesondere flüssigen Mediums, des sog. Meßmediums. Da dessen Brechzahl temperaturabhängig ist, wird zur Eliminierung des Temperatureinflusses ein sog. Referenzsensor vorgesehen, der von einem bekannten Referenzmedium umgeben ist. Bei bekannter Brechzahl des Referenzmediums ist die Ausgangsgröße des Referenzsensors der Temperatur des Meßmediums oder der Umgebung umgekehrt proportional. Damit kann in der Meßwertaufbereitungsvorrichtung der Temperatureinfluß auf die Ausgangsgröße des Meßsensors eliminiert werden und in der Anzeigevorrichtung wird die bezüglich der Temperatur normierte, d.h. auf z.B. Raumtemperatur bezogene Brechzahl des Meßmediums angezeigt.

Bei einem bekannten Refraktometer dieser Art zur Bestimmung der Brechzahl von Flüssigkeiten sind Meß- und Referenzsensor getrennt in jeweils einem von zwei der gleichen Temperatur ausgesetzten Gefäßen angeordnet, die jeweils mit dem Referenzmedium und mit einer
Probe des Meßmediums gefüllt werden müssen. Ein solches
Refraktometer ist unhandlich, wenig geeignet für den
mobilen Einsatz und umständlich in der Handhabung.

Der Erfindung liegt die Aufgabe zugrunde, ein Refraktometer der eingangs genannten Art zu schaffen, das als
echtes Handgerät leicht zu handhaben ist, ohne Schwierigkeiten mitgeführt werden kann und somit geeignet ist,
an beliebigen, ständig wechselnden Meßorten unter unterschiedlichen Umweltbedingungen eingesetzt werden zu
können.

Die Aufgabe ist bei einem Refraktometer der im Oberbegriff des Anspruchs 1 definierten Gattung erfindungsgemäß durch die Merkmale im Kennzeichenteil des Anspruchs 1 gelöst.

Das erfindungsgemäße Refraktometer ist ein echtes Handgerät, da es nur noch eine einzige Meßsonde aufweist,
die über ein flexibles Kabel mit einem handlichen Gehäuse verbunden ist. Die Meßsonde braucht nur noch in
das Meßmedium eingetaucht zu werden. Eine Probeentnahme aus dem Meßmedium ist nicht mehr erforderlich.
Durch das unmittelbare Eintauchen der Meßsonde in das
Meßmedium lassen sich auch laufend Veränderungen der
Brechzahl des Meßmediums, selbst während des laufenden
Produktionsprozesses feststellen und überwachen. Die
Abmessungen der Meßsonde können extrem klein gehalten
werden, so daß die Meßsonde z.B. auch in ein Reagenzglas eingetaucht werden kann. Das erfindungsgemäße
Refraktometer ist damit auch für Labormeßtechnik und
sonstige Analysentechnik geeignet.

Da viele physikalische und molekularspezifische Größen in gesetzmäßigem Zusammenhang mit der Brechzahl stehen, kann das erfindungsgemäße Handrefraktometer zum Erfassen einer Vielzahl von weiteren Meßgrößen verwendet werden. Um den umständlichen Gebrauch von Umrechnungstabellen zu vermeiden, werden dabei zweckmäßig die notwendigen Umrechnungen elektronisch in der Meßwertaufbereitungsvorrichtung durchgeführt. Die Anzeige der gewünschten Meßgröße kann per Anwahl auf einem im Gehäuse angeordneten Tastenfeld bestimmt werden.

Da das Handrefraktometer alle Meßgrößen mit Hilfe von Lichtmessungen ermittelt, ist sein Einsatz auch nicht durch die am Einsatzort herrschenden Umweltbedingungen beschränkt. So können Messungen mittels des erfindungsgemäßen Handrefraktometers sowohl im Hochtemperaturfeld, im elektrischen Feld, unter Hochspannung und auch in explosiver und aggressiver Umgebung durchgeführt werden.

Die Erfindung ist anhand eines in der Zeichnung dargestellten Ausführungsbeispiels im folgenden näher beschrieben. Es zeigen:

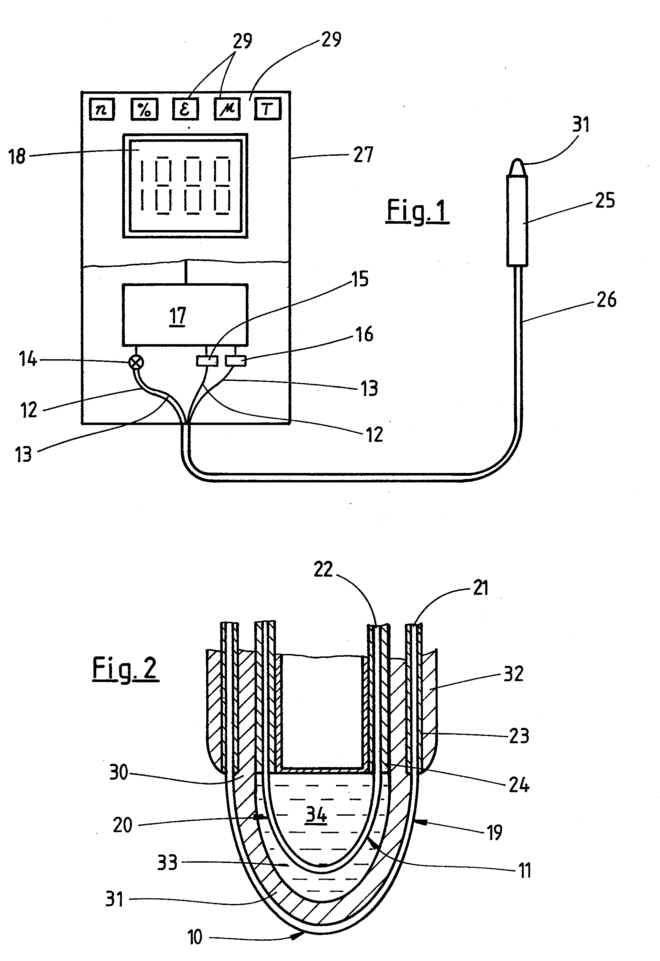

Fig. 1    eine schematische Darstellung einer Draufsicht auf ein Handrefraktometer, teilweise geschnitten,

Fig. 2    einen Längsschnitt einer Meßsonde des Refraktometers in Fig. 1, vergrößert und ausschnittweise.

Das Refraktometer weist einen Meßsensor 10 und einen Referenzsensor 11 auf, die jeweils in Lichtleiter 12 bzw. 13 eingekoppelt sind, die von einer gemeinsamen Lichtquelle 14 zu jeweils einem Lichtdetektor 15, 16 führen. In bekannter Weise wird das von der Lichtquelle 14 in die Lichtleiter 12, 13 eingekoppelte Licht in den Sensoren 10, 11 teilweise total reflektiert, wobei die reflektierte Lichtmenge abhängt von dem Verhältnis der Brechzahlen der Sensoren 10, 11 einerseits und des jeweils umgebenden Mediums. Die reflektierte Lichtmenge wird mit den Lichtdetektoren 15, 16 gemessen. Die Ausgangssignale der Lichtdetektoren 15, 16 werden einer Meßwertaufbereitungsvorrichtung 17 zugeführt, die aus diesen einen Anzeigewert für eine Anzeigevorrichtung 18 ermittelt.

Wie ebenfalls bekannt, sind der Meßsensor 10 und der Referenzsensor 11 einstückig mit den Lichtleitern 12,13 und werden jeweils von einem etwa U-förmigen Krümmungsbereich 19 bzw. 20 des jeweiligen Lichtleiters 12, 13 gebildet. Die Lichtleiter 12, 13 sind vorzugsweise jeweils als Lichtleitfaser 21, 22 ausgebildet, die eine Ummantelung 23 bzw. 24 aufweist. Im U-förmigen Krümmungsbereich 19 bzw. 20 der Lichtleitfasern ist die Ummantelung entfernt.

Der Meßsensor 10 und der Referenzsensor 11 sind zu einer Meßsonde 25 zusammengefaßt, die über ein von den Lichtleitern 12, 13 bzw. Lichtleitfasern 21, 22 mit Ummantelung 23, 24, gebildetes flexibles Kabel 26 mit einem Gehäuse 27 verbunden ist. Das Gehäuse nimmt die Lichtquelle 14, die beiden Lichtdetektoren 15, 16, die Meßwertaufbereitungsvorrichtung 17 und die Anzeigevorrichtung 18 auf. Außerdem ist in dem Gehäuse noch ein Tastenfeld 28 mit Vorwahltasten 29 angeordnet. Mit diesen Vorwahltasten 29 ist eine gewünschte Meßgröße auswählbar, die in einem gesetzmäßigen Zusammenhang mit der Brechzahl des zu messenden Mediums, kurz Meßmedium genannt, steht. Diese ausgewählte Meßgröße wird in der Meßwertaufbereitungsvorrichtung aus den Ausgangssignalen der Lichtdetektoren 15, 16 berechnet und zur Anzeige in der Anzeigevorrichtung 18 freigegeben.

Zur räumlich vorteilhaften Vereinigung von Meß- und Referenzsensor 10, 11 weist die Meßsonde 25 einen Sondenkörper 30 mit einer im Längsschnitt etwa U-förmigen Meßspitze 31 auf. Der Sondenkörper ist mit einem Mantel 32 umgeben, aus welchem die Meßspitze 31 ummantelungsfrei hervorsteht. Auf der Oberfläche der Meßspitze 31 ist der Meßsensor 10 in Form des U-förmigen gekrümmten Bereichs des Lichtleiters 12 angeordnet. Im Innern weist die Meßspitze 31 einen Hohlraum 33 auf, der mit einem bekannten Referenzmedium 34, vorzugsweise einer Flüssigkeit, gefüllt ist. In diesem Hohlraum 33 ist der Referenzsensor 11 angeordnet. Der Hohlraum 33 weist einen möglichst geringen Abstand von der Oberfläche der Meßspitze 31 auf, so daß zwischen Oberfläche der Meßspitze 31 und dem Referenzmedium 34 ein Temperaturausgleich in möglichst kurzer Zeit stattfinden kann. Die Lichtleiter 12, 13 als ummantelte Lichtleitfasern 21, 22 sind im zylindrischem Teil des Sondenkörpers 30 parallel geführt und gehen dann in das Kabel 26 über.

Die Erfindung ist nicht auf das vorstehend beschriebene Ausführungsbeispiel beschränkt, so kann der Referenzsensor auch als spiralförmige Krümmung des Lichtleiters 13 ausgebildet werden. Eine solche Ausbildung ist in der US-PS 3 282 149 beschrieben.

Das vorstehend beschriebene Refraktometer ist nicht auf die Messung der Brechzahl und damit zusammenhängender Größen von Flüssigkeiten beschränkt. So kann dieses auch für gasförmige und feste Medien verwendet werden. Bei gasförmigen Medien muß jedoch die Druckabhängigkeit der Brechzahl in Kauf genommen werden, während feste Medien auf solche Stoffe beschränkt sind, in welche sich die Meßsonde 25 mit Meßspitze 31 eindrücken läßt.

—.—.—.—.—.—.—

Patentanwalt | Mülbergerstr. 65 | Zugelassener Vertreter beim
Dipl.-Ing. Volkhard Kratzsch | D-7300 Esslingen | Europäischen Patentamt

Telefon Stuttgart (0711) 317000 | Deutsche Bank Esslingen 210906
cable «krapatent» esslingenneckar | Postscheckamt Stuttgart 10004-701

Phönix

Armaturen-Werke

Bregel GmbH

6000 Frankfurt

24.5.1983

Anwaltsakte 3767

Ansprüche

1. Refraktometer mit einem von einer Lichtquelle zu einem Lichtdetektor führenden ersten Lichtleiter mit einem darin eingekoppelten, in ein Meßmedium eintauchbaren Meßsensor, der von einem etwa U-förmigen ummantelungsfreien Krümmungsbereich des Lichtleiters gebildet wird, mit einem zweiten von der Lichtquelle zu einem Lichtdetektor führenden Lichtleiter mit einem darin eingekoppelten, von einem bekannten Referenzmedium umgebenen Referenzsensor und mit einer Meßwertaufbereitungs- und Anzeigevorrichtung, d a - d u r c h  g e k e n n z e i c h n e t, daß der Meßsensor (10) und der Referenzsensor (11) in einer Meßsonde (25) vereinigt sind, die über ein von den Lichtleitern (12,13) gebildetes flexibles Kabel (26) mit einem Lichtquelle (14), Lichtdetektoren (15,16) und Meßwertaufbereitungs- und Anzeigevorrichtung (17,18) aufnehmenden Gehäuse (27) verbunden ist, daß die Meßsonde (25) einen von einem Mantel (32) umgebenen, aus diesem mit einer im Längsschnitt etwa U-förmigen Meßspitze (31) hervorragenden

- 8 -

0128301

Sondenkörper (30) aufweist, und daß die Meßspitze (31) auf ihrer Oberfläche den Meßsensor
(10) trägt und im Innern einen mit dem Referenzmedium (34) gefüllten Hohlraum (33) aufweist, in
welchem der Referenzsensor (11) angeordnet ist.

2. Refraktometer nach Anspruch 1, d a d u r c h
g e k e n n z e i c h n e t, daß der Referenzsensor (11) von einem etwa U-förmigen ummantelungsfreien Krümmungsbereich (20) des zweiten Lichtleiters (13) gebildet ist, der vorzugsweise etwa
parallel zum U-förmigen Krümmungsbereich (19)
des ersten Lichtleiters (13) verläuft.

3. Refraktometer nach Anspruch 1 oder 2, d a -
d u r c h  g e k e n n z e i c h n e t, daß
die Lichtleiter (12,13) als flexible Lichtleitfasern (21,22) ausgebildet sind.

−.−.−.−.−.−.−

1/1

0128301

Fig.1

Fig.2